# FASCICULE DE BREVET EUROPEEN

(11) **EP 0 724 949 B1**
(45) Date de publication et mention de la délivrance du brevet: **27.08.2003**
(21) Numéro de dépôt: 96100887.7
(22) Date de dépôt: 23.01.1996
(51) Int. Cl.: B29C 70/20, B29D 30/38

(54) **Procédé et dispositif pour appliquer un fil sur un support**
Verfahren und Vorrichtung zum Fadenablegen auf einen Träger
Process and apparatus for applying a filament to a support

(30) Priorité: 01.02.1995 FR 9501251
(43) Date de publication de la demande: 07.08.1996
(73) Titulaire: COMPAGNIE GENERALE DES ETABLISSEMENTS MICHELIN-MICHELIN & CIE, 63040 Clermont-Ferrand Cédex (FR)
(72) Inventeur: Perrin, Frédéric, F-63100 Clermont-Ferrand (FR)
(74) Mandataire: Ribière, Joel

(56) Documents cités:
- US-A- 3 082 140
- US-A- 3 511 739
- US-A- 5 002 621

## Description

L'invention concerne un dispositif selon le préambule de la revendication 1 et un procédé selon le préambule de la revendication 7 permettant d'appliquer des fils sur des supports, notamment des supports en matières plastiques ou en caoutchouc. De tels procédés et de tels dispositifs permettant par exemple la réalisation de nappes de renfort, notamment de nappes de renfort pour enveloppes de pneumatiques. L'invention concerne en particulier les procédés et les dispositifs qui permettent d'appliquer des fils sur un support en leur donnant une forme sinueuse.

Des dispositifs permettant d'appliquer des fils sur un support en leur donnant une forme sinueuse sont décrits par exemple dans les brevets ou demandes de brevets suivants :
FR-A-2 042 859, FR-A-2 325 497, US-A-1 800 179,
US-A-5 002 621, US-A-4 820 143.

Ces dispositifs présentent au moins un des inconvénients suivants :
- complexité donnant lieu à des pannes fréquentes, ou nécessitant un entretien coûteux et fréquent ;
- manque de précision dans la pose des fils, de telle sorte que les nappes obtenues ont une géométrie hétérogène et présentent de ce fait des caractéristiques physiques qui varient suivant leur longueur ;
- vitesse lente.

Le brevet US-A-4 981 542 décrit un dispositif permettant d'appliquer des fils sur un support en utilisant deux pinces. Ce dispositif permet de déposer les fils avec une grande précision, mais la vitesse de pose est relativement lente par suite de la succession complexe des mouvements des pinces qui nécessitent des arrêts du support lors des mouvements transversaux des fils, avant qu'ils soient appliqués sur le support, et lors de l'application des fils sur le support.

Le brevet US-A-5 242 520 décrit un dispositif permettant d'appliquer des fils sur un support à l'aide d'un tambour comportant des dents fixes et des dents mobiles et la demande internationale de brevet WO 92/12001 décrit un dispositif permettant d'appliquer des fils sur un support en faisant arriver les fils avec une vitesse maîtrisée sur un tambour, la forme sinueuse étant obtenue à l'aide de dents que l'on déplace les unes par rapport aux autres, parallèlement à l'axe de rotation, au moins une partie de ces dents étant flexibles entre une extrémité libre au contact d'un fil et une zone d'ancrage. Ces dispositifs permettent de déposer les fils avec une grande précision et avec une vitesse importante, mais ils sont relativement complexes et coûteux.

Le brevet US-A-5 002 621 décrit un dispositif selon le préambule de la revendication 1 et un procédé selon le préambule de la revendication 7.

Le but de l'invention est de remédier à ces inconvénients ou de les atténuer dans une large mesure.

En conséquence, le procédé conforme à l'invention pour appliquer au moins un fil sur au moins un support, de façon à obtenir au moins une nappe, donnant au fil une forme sinueuse, est tel qu'énoncé dans la revendication 7.

L'invention concerne également un dispositif pour appliquer au moins un fil sur au moins un support, de façon à obtenir au moins une nappe, en donnant au fil une forme sinueuse, ce dispositif étant tel qu'énoncé dans la revendication 1.

L'invention est notamment mise un oeuvre pour la fabrication de nappes de renfort, utilisables par le renforcement d'articles tels que par exemple des tuyaux, des articles manufacturés en caoutchouc, en particulier des enveloppes de pneumatiques.

Le terme "fil" doit être pris dans un sens très général. Un fil peut être un "fil simple" constitué par exemple par un ou plusieurs filaments. Lorsque le fil simple est constitué d'un seul filament il est appelé "monofilament" et lorsque le fil simple est constitué de plusieurs filaments il est appelé "multifilament". Un fil peut être d'autre part lui-même un ensemble de fils simples. A titre d'exemple, un tel ensemble est appelé "retors" lorsqu'il est constitué de plusieurs fils simples réunis par une seule opération de torsion, et un tel ensemble est appelé "câblé" lorsqu'il est constitué de plusieurs fils, dont au moins un est un retors, réunis par une ou plusieurs opérations de torsion.

Le terme "forme sinueuse" est très général et s'applique par exemple au cas où les fils ont une forme ondulée, en particulier une forme pratiquement sinusoïdale, et au cas où les filaments comportent des segments pratiquement rectilignes reliés par des parties courbes.

Les fils sont de préférence des fils textiles, par exemple des fils de polyamides aromatiques ou non aromatiques, des fils de rayonne, de polyester, ou des fils constitués de matières différentes, et leur diamètre varie de préférence entre 0,2 et 4 mm, mais l'invention s'applique aussi à des fils non textiles, par exemple des fils métalliques, en particulier des fils en acier, des fils en carbone, en fibres de verre, en bore, et de façon générale à des fils dont le diamètre est éventuellement inférieur à 0,2 mm ou supérieur à 4 mm.

L'invention sera illustrée au moyen des exemples non limitatifs qui suivent, en faisant le cas échéant référence au dessin.

Sur le dessin :
- la figure 1 représente, vu de profil, un dispositif conforme à l'invention ;
- la figure 2 représente, vu de dessus, le dispositif représenté à la figure 1 ;
- la figure 3 représente plus en détail en coupe un système de freinage utilisé dans le dispositif représenté aux figures 1 et 2;
- la figure 4 représente vue de dessus une nappe obtenue avec le dispositif conforme à l'invention ;
- la figure 5 représente, vue de dessus, une partie d'un autre dispositif conforme à l'invention ;
- la figure 6 représente, vue de profil, une partie d'un autre dispositif conforme à l'invention.

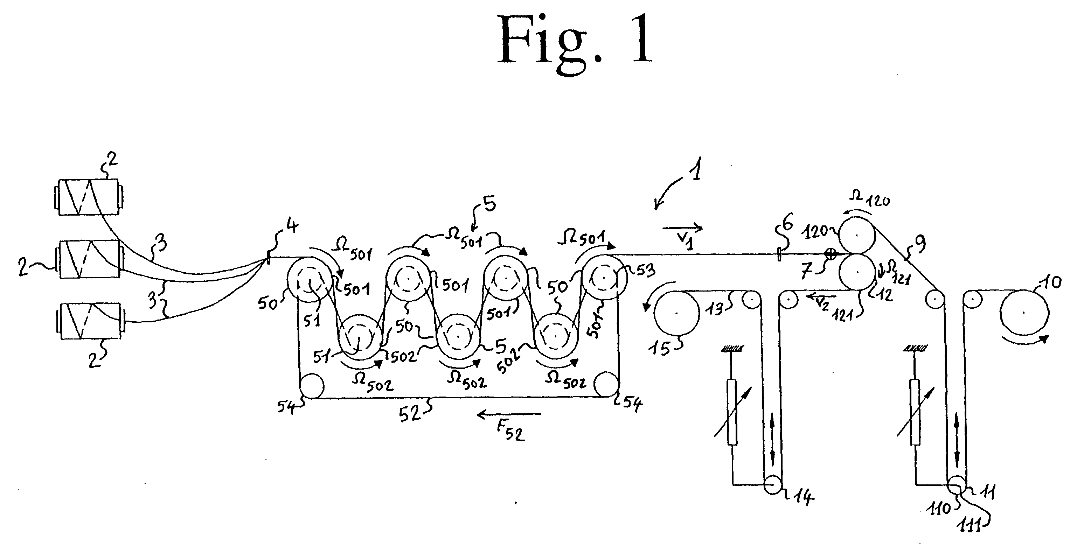

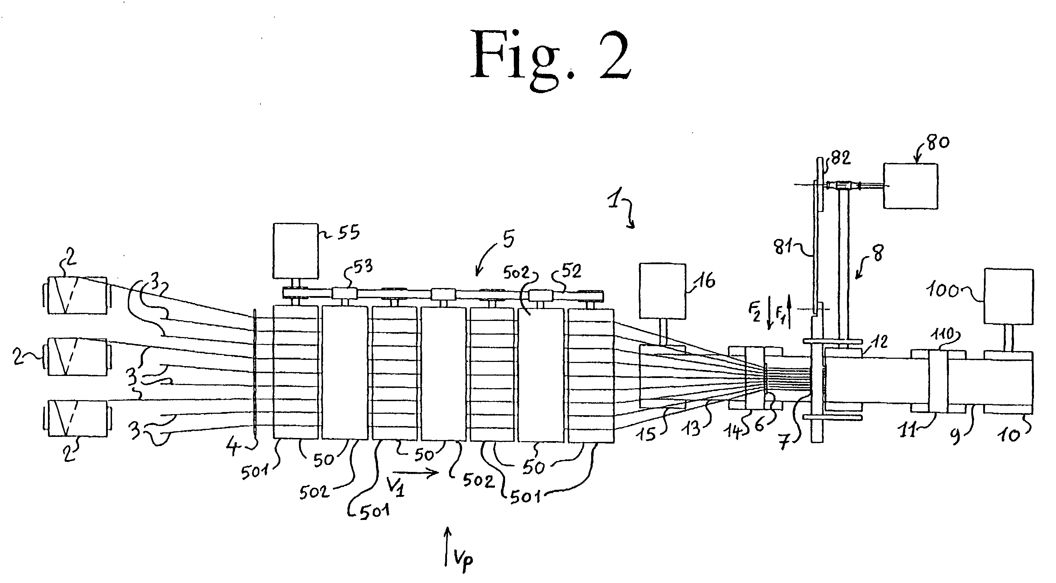

Les figures 1 et 2 représentent un dispositif 1 conforme à l'invention.

Ce dispositif comporte plusieurs bobines 2 sur chacune desquelles est enroulé un fil 3. Pour la clarté du dessin, seules trois bobines 2 sont représentées sur les figures 1 et 2. Les fils 3, entraînés par le cabestan 5, passent dans des moyens 4 de freinage qui donnent aux fils 3, à la sortie du système 4, une légère tension avant leur arrivée sur le cabestan 5.

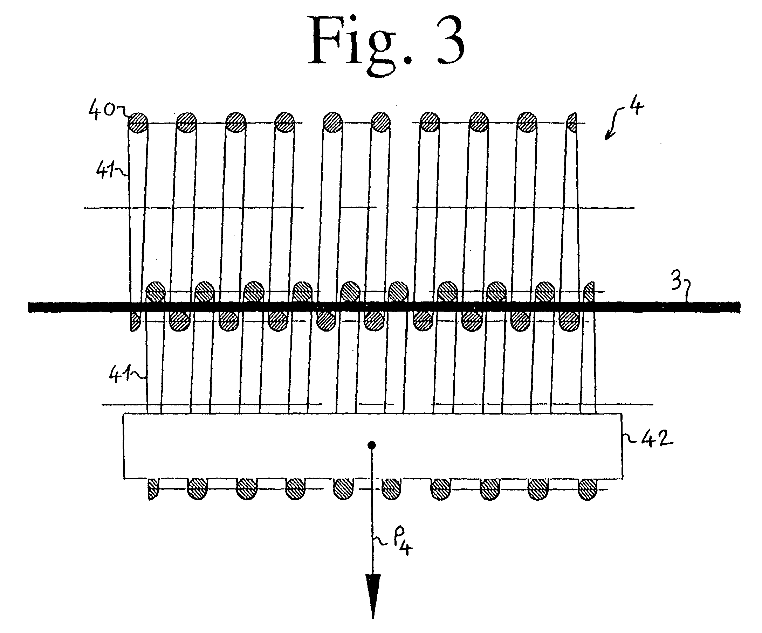

Les moyens 4 représentés partiellement plus en détail à la figure 3, comportent par exemple autant de paires 40 de ressorts imbriqués 41 qu'il y a de fils 3, chaque fil passant dans une de ces paires 40. La force appliquée sur le fil 3 par la paire 40 correspondante varie en fonction du poids P₄ du cylindre 42 qui est au contact d'un des ressorts 41 et qui le tire vers le bas.

Les fils 3 sont entraînés sans glissement par le cabestan 5 qui leur donne une vitesse linéaire déterminée (la même pour tous les fils) représentée sur les figures 1 et 2 par le vecteur V₁, orienté selon la direction longitudinale, par exemple horizontale. La figure 1 est une vue de profil du dispositif 1 prise selon la flèche Vₚ de la figure 2, la figure 2 est une vue de dessus du dispositif 1, et la figure 3 est une coupe des moyens 4 dans un plan vertical passant par un fil 3.

Le cabestan 5 est formé de sept rouleaux 50 d'axes 51 horizontaux et parallèles, ces axes 51 étant décalés les uns par rapport aux autres dans le sens de progression des fils 3 schématisée par la flèche horizontale V₁ à la figure 1. Les rouleaux 50, de même diamètre, sont entraînés en rotation par la courroie 52 qui s'enroule autour des moyeux 53 des rouleaux 50 et autour des galets 54, dans le sens de la flèche F_{52.} Les rouleaux 50 comportent quatre rouleaux 501 dont les axe 51 sont sensiblement disposés sur un plan horizontal et trois rouleaux 502 dont les axes 51 sont sensiblement disposés sur un autre plan horizontal placé au-dessous du plan précédent. Sous l'action de la courroie 52, les rouleaux 501 tournent avec la même vitesse angulaire schématisée par la flèche Ω₅₀₁ et les trois rouleaux 502 tournent avec la même vitesse angulaire schématisée par la flèche Ω₅₀₂, les flèches Ω₅₀₁ et Ω₅₀₂ étant opposées et ayant la même valeur absolue (figure 1). Les moyens permettant l'entraînement de la courroie 52 sont connus et comportent le moteur 55 qui actionne un des rouleaux 50.

A la sortie du cabestan 5, la longueur de chaque fil 3 délivrée est donc constante, égale par seconde à la vitesse linéaire V₁, c'est-à-dire la valeur absolue du vecteur V₁.

Les fils 3 délivrés par le cabestan 5 arrivent aux moyens 6 permettant de rapprocher les fils 3 pour les disposer sensiblement dans un plan horizontal dans lequel ils sont pratiquement parallèles entre eux. Ces moyens 6 ne sont pas absolument nécessaires mais ils facilitent la mise en oeuvre ultérieure des fils 3 et ils comportent par exemple un peigne fixe traversé par les fils 3.

Les fils 3 passent ensuite dans des moyens 7 qui permettent de donner aux fils 3 des mouvements alternatifs transversaux, schématisés sur la figure 2 par les flèches opposées F₁ et F₂ perpendiculaires à la direction générale de progression des fils 3, schématisée par la flèche V₁ sur les figures 1 et 2. Ces moyens 7 sont par exemple une filière dont les mouvements transversaux schématisés par les flèches F₁ et F₂ sont obtenus grâce au système 8 qui comporte un moteur 80 actionnant une bielle 81 fixée sur un volant 82.

Le support 9, par exemple un film en matière plastique sur lequel est appliqué une couche de caoutchouc, est initialement enroulé sur la bobine 10. Il est entraîné par la calandre 12 en passant dans le système 11 qui permet de règler sa tension. Ce système 11, connu, comporte par exemple un rouleau horizontal 110. La position verticale de l'axe 111 du rouleau 110 permet de régler la vitesse du moteur 100 qui provoque le déroulage du support 9 à partir de la bobine 10, et la tension du support 9 est donnée par le poids du rouleau 110.

Le support 9 arrive ainsi à la calandre 12 avec une tension constante et les fils 3, par suite de l'action de la filière 7, sont appliqués contre le caoutchouc du support 9 avec une forme ondulée, à l'entrée de la calandre 12, le contact définitif des fils 3 et du support 9 étant obtenu par le pressage dû aux tambours 120 et 121 de la calandre 12. Les tambours 120, 121, dont la surface extérieure cylindrique est lisse, ont le même diamètre et tournent selon les vitesses angulaires opposées représentées respectivement par les flèches Ω₁₂₀, Ω₁₂₁ avec la même valeur absolue (figure 1). La calandre 12 entraîne ainsi le support 9 et les fils 3 au contact selon une vitesse longitudinale constante représentée par le vecteur V₂ sur la figure 1, la vitesse linéaire V₂, qui est la valeur absolue du vecteur V₂, étant inférieure à la vitesse linéaire V₁.

Le dispositif 1 est dépourvu de moyens permettant un réglage de la tension entre le cabestan 5 et la calandre 12.
Les moyens 7 sont réglés de telle sorte que chaque fil 3 soit tendu entre le cabestan 5 et le point où ce fil arrive au contact du support 9, dans la calandre 12, et ceci au moment où les moyens 7 atteignent leur position transversale extrème, selon la flèche F₁ et selon la flèche F₂, c'est-à-dire lorsque ce fil 3 fait l'angle maximal avec la direction longitudinale. Par contre lorsque les moyens 7 sont dans une position intermédiaire entre ces extrèmes, chacun des fils 3 peut prendre une position lâche entre les moyens 7 et la calandre en n'étant plus tendu puisque la vitesse linéaire V₂ d'entraînement par la calandre 12 est inférieure à la vitesse linéaire V₁ avec laquelle ce fil 3 est délivré par le cabestan 5. Ce relâchement est le plus accentué au voisinage de la position médiane des moyens 7, lorsqu'ils se trouvent pratiquement entre les positions extrèmes précédemment décrites. Il se produit ainsi un équilibrage automatique de l'arrivée des fils 3 sur le support 9 de telle sorte que la longueur de chaque fil 3 déposée sur le support 9 pendant un temps T correspondant à une longueur d'onde de l'ondulation du fil 3 soit égale à V₁T, et donc constante lorsque l'on règle V₁, ainsi que la fréquence des mouvements alternatifs des moyens 7, à des valeurs fixes, T correspondant au temps pendant lequel ces moyens 7 effectuent un mouvement alternatif complet. La vitesse V₂ est elle aussi réglée à une valeur fixe pendant la réalisation de la nappe 13.

Ce réglage précité des moyens 7 est réalisé en particulier en réglant la distance entre les moyens 7 et la calandre 12 avec des moyens connus non représentés sur le dessin dans un but de simplification, par exemple des vis de réglage.

L'amplitude des oscillations des moyens 7 selon les flèches F₁ et F₂ peut être réglée de façon simple par exemple en faisant varier la position de la bielle 81 sur le volant 82.

La nappe 13, constituée du support 9 et des fils 3 au contact du support 9, passe sur le système 14 de réglage de tension, et elle est ensuite enroulée sur la bobine 15, entraînée en rotation par le moteur 16. Le système 14 est par exemple semblable au système 11 décrit précédemment et il donne de préférence au support 9 la même tension que le système 11.

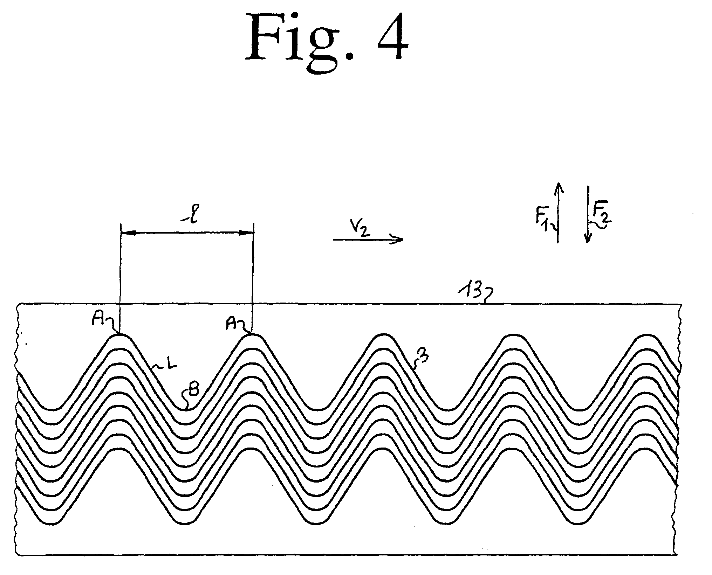

La figure 4 représente, vu de dessus, une partie de la nappe 13 ainsi obtenue à la sortie de la calandre 12. Pour un fil 3 donné, "l" représente la longueur d'onde d'une ondulation d'un fil 3, c'est-à-dire la longueur rectiligne entre deux crêtes A successives de cette ondulation situées d'un même côté de la nappe 13, en direction de la gauche par rapport à la flèche V₂, et L représente la longueur effective du fil 3 ondulé entre ces points successifs A, c'est-à-dire pour une longueur d'onde. Par définition, le taux de conformation τ du fil 3 est donné par la relation τ = L/l. Ce taux τ est égal au rapport R donné par la relation
R = V₁/V₂ c'est-à-dire qu'il est donné par le rapport des vitesses linéaires V₁ (vitesse linéaire des fils 3 à la sortie du cabestan 5) et V₂ (vitesse linéaire du support 9 par suite de l'action de la calandre 12).

La période de l'ondulation des fils 3 sur la nappe 13, c'est-à-dire, pour un fil 3 donné, le nombre d'ondulations pour une longueur donnée de nappe 13, est définie en réglant le rapport entre la fréquence des déplacements alternatifs de la filière 7 et la vitesse de rotation des rouleaux de la calandre.

La figure 4 représente un point B de crête situé entre deux points A succcessifs, ce point B étant situé en direction de la droite par rapport à la flèche V₂, ce point B correspondant donc à une demi-longueur d'onde. Il faut noter qu'il y a un certain retard entre l'oscillation des moyens 7 et la position d'un fil 3 quelconque sur le support 9, c'est-à-dire que, sur la figure 4, chaque point A correspond pratiquement à une position extrème des moyens 7 selon la flèche F₂ (orientée vers la droite) et chaque point B correspond pratiquement à une position extrème des moyens 7 selon la flèche F₁ (orientée vers la gauche).

Dans l'exemple décrit, le film en matière plastique assure la tenue du support 9 et évite un allongement du caoutchouc de ce support lors de la réalisation de la nappe 13.

Le dispositif 1 conforme à l'invention permet les avantages suivants :
- il est dépourvu de moyens permettant de régler la tension des fils 3 entre le cabestan 5 et la calandre 12 ; cette réalisation, conforme à l'exemple décrit, permettant une réalisation simple car un réglage de la tension entre le cabestan 5 et la calandre 12 necessiterait un asservissement complexe entre ces moyens de réglage de la tension et la position des moyens 7, pour que la tension soit contrôlée en suivant l'ondulation des fils 3 sur le support 9 ; dans l'invention au contraire l'asservissement entre la vitesse V₁ et la vitesse V₂ est facile à réaliser ;
- le taux de conformation des fils 3 est réglé de façon directe, simple et précise par le réglage des vitesses du cabestan 5 et de la calandre 12 et l'amplitude des mouvements transversaux alternatifs de la filière 7 n'a pas à être réglée de façon précise, car toute variation de cette amplitude est corrigée par le fait que les fils 3 sont posés avec une longueur constante sur le support 9, il se produit alors un glissement des fils 3 sur le support 9, avant le passage entre les rouleaux 120, 121 de la calandre 12, ce qui corrige automatiquement cette variation, les fils 3 étant alors toujours posés avec le taux τ donné de façon précise, et indépendante de la filière 7, par le rapport des vitesses linéaires V₁ et V₂, comme précédemment indiqué ;
- par suite de l'absence de contrôle de la tension entre le cabestan 5 et la calandre 12, la nappe 13 peut être réalisée avec une grande vitesse, par exemple de l'ordre de 10 m/minute, cette vitesse pouvant atteindre ou même dépasser 20 m/minute, en effet un contrôle de la tension utilise des dispositifs qui entrent en vibration lors du déroulement des fils, ce qui limite considérablement la vitesse de ce déroulement.

A titre d'exemple, les détails de réalisation sont les suivants :
- support 9 : feuille de polyéthylène sur laquelle est appliquée une couche de coutchouc, la largeur du support 9 étant de 100 mm ;
   les fils 3 sont des retors de nylon dont le diamètre est environ de 1,2 mm, le nombre de bobines 2 étant égal à 40 (un fil 3 par bobine 2) ;
- la vitesse linéaire V₁ est égale à 13 m/minute et la vitesse linéaire V₂ est égale à 10 m/minute, le rapport τ étant donc égal à 1,3 ;
- la longueur d'onde "l" de chacun des fils 3 sur la nappe est égale à 15 mm et la densité de la nappe en fils 3 est de 40 fils/dm, cette densité étant mesurée perpendiculairement à la direction longitudinale de la nappe, c'est-à-dire perpendiculairement à la flèche V₂ ;
- la tension donnée par les moyens 4 est de 2 N/fil et la tension donnée par les moyens 11 et 14 est de 10 N pour l'ensemble du support 9 ou de la nappe 13, la tension étant donc la même pour le support 9 et pour la nappe 13.

Il va de soi que ces chiffres ne sont en aucune façon limitatifs, c'est ainsi par exemple que le nombre de bobines 2 pourrait être augmenté pour atteindre ou même dépasser 60 et que la largeur de la nappe pourrait atteindre ou même dépasser 60 cm.

L'invention s'applique aussi au cas où l'on n'utilise qu'un fil 3.

La valeur de τ peut varier dans de larges limites, par exemple de 1,01 à 3.

De même, la longueur d'onde "l" des fils 3 peut varier dans de larges limites, par exemple de 5 à 50 mm.

La densité de la nappe 13 en fils 3 peut varier dans de larges limites, par exemple de 1 fil/dm à 60 fils/dm.

L'invention n'est pas limitée aux moyens précédemment décrits, C'est ainsi par exemple que le cabestan 5 pourrait être remplacé par deux tapis entre lesquels passeraient les fils 3 et que le peigne 6 pourrait être remplacé par une filière comportant autant de trous qu'il y a de fils 3.

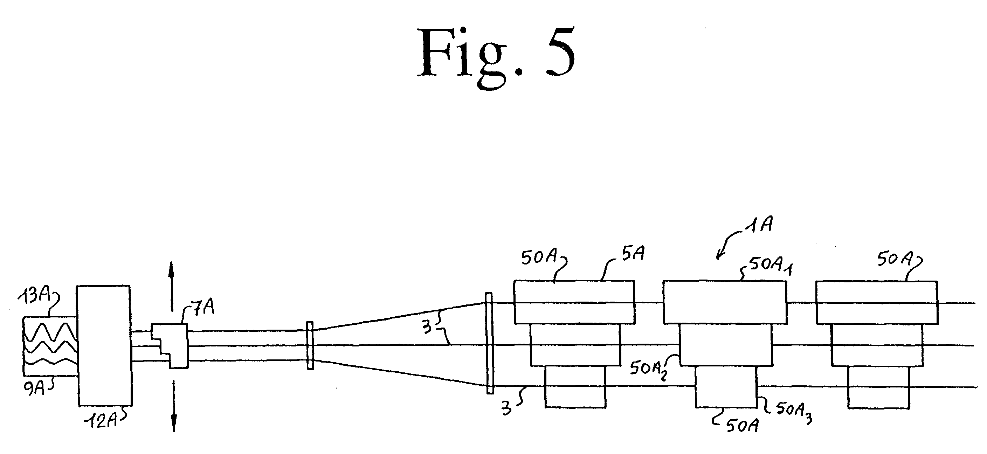

Dans l'exemple précédemment décrit les fils 3 avaient tous la même vitesse à la sortie du cabestan 5, mais l'invention s'applique par exemple aussi aux cas où les fils 3 ont des vitesses différentes à la sortie des moyens 5, comme représenté à la figure 5. Dans le dispositif 1A représenté en partie, vu de dessus, sur cette figure 5, les moyens 5A sont constitués par un cabestan comportant trois séries de cylindres 50A. Chacune de ces séries est formée de trois cylindres 50A₁, 50A₂, 50A₃, de même axe et de diamètres différents sur chacun desquels passe un fil 3. Les trois cylindres 50A₁, 50A₂, 50A₃ d'une même série 50A tournent à la même vitesse angulaire et donc la vitesse linéaire des trois fils 3 varie d'un fil à l'autre par exemple en diminuant du cylindre 50A₁ au cylindre 50A₃, de telle sorte que le taux τ varie d'un fil à l'autre sur la nappe 13A, en augmentant d'un côté de la nappe à l'autre, comme représenté à la figure 5. Pour éviter un glissement excessif des fils 3 sur le support 9A, il est alors préférable que, pour chaque fil, la distance entre la calandre 12A et les moyens 7A, animés de mouvements alternatifs, soit d'autant plus grande que la vitesse linéaire du fil à l'entrée de ces moyens, est plus faible. C'est ainsi par exemple que lorsque ces moyens 7A sont constitués d'une filière, la longueur des trous où passent les fils varie de la façon précédemment décrite (les trous correspondant aux fils animés de la vitesse la plus grande étant les plus longs, l'entrée de tous ces trous où pénètrent les fils étant située à la même distance de la calandre 12A).

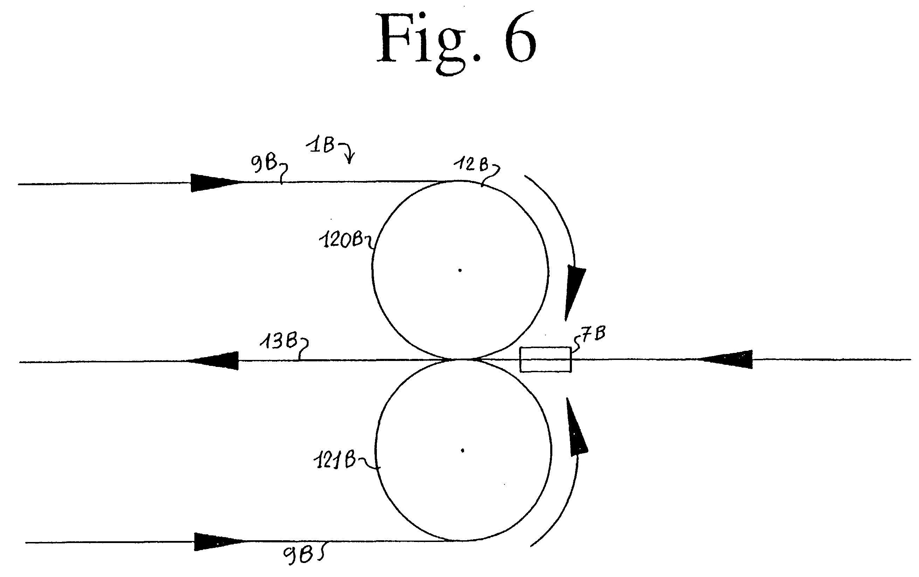

L'invention s'applique aux cas où on utilise plusieurs supports pour réaliser une nappe, comme représenté à la figure 6. Sur cette figure on voit, en coupe verticale, une partie d'un dispositif 1B avec une calandre 12B comportant deux rouleaux 120B, 121B sur lesquels arrivent deux supports 9B, par exemple identiques au support 9 précédemment décrit pour le dispositif 1. Les fils 3 passent à travers les moyens 7B animés de mouvements alternatifs, par exemple identiques aux moyens 7 précédemment décrits, et ils sont pris en sandwich entre les supports 9B lorsqu'ils prennent leur forme sinueuse pour donner la nappe 13B comportant les fils 3 disposés entre les deux supports 9B.

Les nappes 13 peuvent être utilisées par exemple pour renforcer des enveloppes de pneumatiques, par exemple en les appliquant au-dessus des nappes de renfort sommet de ces enveloppes ou entre les nappes carcasses de ces enveloppes lorsqu'il y a plusieurs nappes carcasses, en particulier dans le cas des enveloppes conventionnelles de pneumatiques. Lors de la conformation et/ou de la cuisson, les fils de ces nappes perdent leur forme sinueuse et sont orientés dans la direction circonférentielle de ces enveloppes, c'est-à-dire sensiblement dans des plans perpendiculaires à l'axe de rotation des enveloppes, pour fretter ces nappes de renfort afin par exemple de résister aux forces centrifuges, en particulier lorsqu'il s'agit d'enveloppes de pneumatiques pour avions.

On peut aussi envisager des cas où les nappes conservent tout ou partie des ondulations des fils 3 après conformation et cuisson des enveloppes qui contiennent ces nappes.

Bien entendu, l'invention n'est pas limitée aux exemples de réalisation précédemment décrits.

## Revendications

1. Dispositif pour appliquer en continu au moins un fil (3) sur au moins un support (9) en donnant au fil une forme sinueuse, de façon à obtenir au moins une nappe (13), comportant au moins:
- des moyens d'alimentation du fil (2, 5, 6) et des moyens d'alimentation du support (10, 11, 120) aptes à délivrer respectivement le fil (3) et son support (9) avec des vitesses linéaires contrôlées;
- entre les moyens d'alimentation du fil (2, 5, 6) et les moyens d'alimentation du support (10, 11, 120), des moyens de déplacement transversal (7) permettant de déplacer le fil (3) transversalement par rapport à sa direction de progression;
- des moyens d'application (12) sur le support (9) du fil (3) ainsi déplacé transversalement;
- à la sortie des moyens d'application (12), des moyens d'entraînement (121,14,15) pour entraîner la nappe (13) formée par le fil (3) et le support (9) ainsi au contact,
- les moyens de déplacement transversal étant constitués au moins en partie par une filière (7) apte à se déplacer perpendiculairement à la direction de progression du fil (3), selon un mouvement alternatif, de manière à donner au fil (3) des mouvements alternatifs transversaux en amont des moyens d'application (12);
- les moyens d'application du fil (3) et les moyens d'entraînement pour entraîner la nappe (13) formée par le fil (3) et le support (9) étant constitués au moins en partie par les deux tambours (120,121) d'une calandre (12), dont la surface extérieure cylindrique est une surface lisse.
**caractérisé en ce qu'**il est dépourvu de moyens contrôlant la tension du fil (3) entre les moyens (2,5,6) permettant de délivrer le fil (3) et les moyens d'application (12) du fil (3) sur le support (9).

2. Dispositif selon la revendication 1, **caractérisé en ce qu'**il comporte des moyens (4) permettant de contrôler la tension du fil (3) avant les moyens (5,6) permettant de délivrer le fil (3).

3. Dispositif selon l'une quelconque des revendications 1 ou 2, **caractérisé en ce que** les moyens (2, 5, 6) pour délivrer le fil (3) sont constitués au moins en partie par un cabestan (5).

4. Dispositif selon l'une quelconque des revendications 1 à 3, **caractérisé en ce qu'**il est prévu pour appliquer plusieurs fils (3) et **en ce qu'**il comporte des moyens (6) pour rassembler les fils avant les moyens de déplacement transversal (7).

5. Dispositif selon la revendication 4, **caractérisé en ce que** les moyens (6) pour rassembler les fils (3) sont constitués au moins en partie par un peigne ou une flière.

6. Dispositif selon l'une quelconque des revendications 1 à 15, **caractérisé en ce qu'**il comporte des moyens d'asservissement pour maintenir le rapport (V1/V2) constant.

7. Procédé pour appliquer en continu au moins un fil (3) sur au moins un support (9) en donnant au fil une forme sinueuse, de façon à obtenir au moins une nappe (13), comportant au moins les étapes suivantes:
- on délivre le fil (3) et le support (9) avec des vitesses linéaires contrôlées, de valeurs respectives V₁ et V₂, grâce à des moyens d'alimentation du fil (2, 5, 6) et des moyens d'alimentation du support (10, 11, 12);
- entre les moyens d'alimentation du fil (2, 5, 6) et les moyens d'alimentation du support (10, 11, 12), on déplace le fil (3) transversalement par rapport à sa direction de progression, grâce à des moyens de déplacement transversal (7);
- à la sortie des moyens de déplacement transversal (7), on applique le fil (3) sur le support (9) à l'aide de moyens d'application (12);
- on entraîne la nappe (13) formée par le fil (3) et le support (9) ainsi au contact par des moyens d'entraînement (121,14,15) de telle sorte que la vitesse linéaire du support (9) ait une valeur V₂ inférieure à V₁;
- on récupère la nappe (13) ainsi obtenue;
- les moyens de déplacement transversal étant constitués au moins en partie par une filière;
- les moyens d'application du fil (3) et les moyens d'entraînement pour entraîner la nappe (13) formée par le fil (3) et le support (9) étant constitués au moins en partie par les deux tambours (120,121) d'une calandre (12) dont la surface extérieure cylindrique est une surface lisse;
- la forme sinueuse imposée au fil (3) sur le support (9) étant donnée par des mouvements alternatifs transversaux de ce fil (3) que l'on provoque par une oscillation de la filière (7) dans une direction perpendiculaire à la direction de progression du fil (3), en amont des deux tambours (120, 121) de la calandre (12);
- le fil (3) étant appliqué sur le support (9) par pressage entre les deux tambours (120, 121) de la calandre (12);
**caractérisé en ce qu'**on délivre le fil (3) sans contrôler ensuite la tension du fil (3) avant de l'appliquer sur le support (9), de telle manière qu'on laisse le fil (3) prendre une position lâche, sans tension, entre les moyens d'application (12) et les moyens de déplacement transversal (7), lorsque les moyens de déplacement transversal (7) sont dans une position intermédiaire entre leurs deux positions latérales extrêmes.

8. Procédé selon la revendication 7, **caractérisé en ce que** l'on contrôle la tension du fil (3) avant de le délivrer.

9. Procédé selon les revendications 7 ou 8, **caractérisé en ce qu'**il est mis en oeuvre avec un dispositif selon l'une quelconque des revendications 1 à 6.

## Patentansprüche

1. Vorrichtung zum ständigen Aufbringen mindestens eines Fadens bzw. Drahtes (3) auf mindestens einen Träger (9), indem man dem Draht eine gewundene Form verleiht, um auf diese Weise mindestens eine Lage (13) zu erhalten, die mindestens aufweist:
- Mittel (2, 5, 6) zu Einspeisung des Drahtes und Mittel (10, 11, 120) zur Einspeisung des Trägers, die dazu eingerichtet sind, jeweils den Draht (3) und seinen Träger (9) mit kontrollierten Lineargeschwindigkeiten abzugeben;
- zwischen den Mitteln (2, 5, 6) zu Einspeisung des Drahtes und den Mitteln (10, 11, 120) zur Einspeisung des Trägers Mittel (7) zur Querversetzung, die es gestatten, den Draht (3) in Querrichtung bezüglich seiner Vorschubrichtung zu versetzen;
- Mittel (12) zum Auflegen des so im Querrichtung versetzten Drahtes (3) auf dem Träger (9);
- Antriebsmittel (121, 14, 15) am Ausgang der Mittel (12) zum Auflegen, um die Lage (13) anzutreiben, die von dem Draht (3) und dem Träger (9) gebildet ist, die so im Berührung stehen;
- die Mittel zur Querversetzung sind mindestens teilweise aus einem Zieheisen (7) gebildet, das dazu eingerichtet ist, sich senkrecht zur Vorschubrichtung des Drahtes (3) in einer Wechselbewegung derart zu versetzen, daß dem Draht (3) Quer-Wechselbewegungen vor den Auftragemitteln (12) verliehen werden; und
- die Auftragemittel des Drahtes (3) und die Antriebsmittel zum Antrieb der Lage (13), die durch den Draht (3) und den Träger (9) gebildet ist, sind mindestens teilweise aus zwei Trommeln (120, 121) eines Kalanders (12) gebildet, deren zylindrische Außenoberfläche eine glatte Oberfläche ist;
**dadurch gekennzeichnet, daß** sie keine Mittel aufweist, die die Zugspannung des Drahtes (3) zwischen den Mitteln (2, 5, 6), die die Ausgabe des Drahtes (3) gestatten, und den Auftragemittel (12) des Drahtes (3) auf dem Träger (9) kontrollieren.

2. Vorrichtung nach Anspruch 1, **dadurch gekennzeichnet, daß** sie Mittel (4) aufweist, die es gestatten, die Zugspannung des Drahtes (3) vor den Mitteln (5, 6), die es gestatten, den Draht (3) auszugeben, zu kontrollieren.

3. Vorrichtung nach irgendeinem der Ansprüche 1 oder 2, **dadurch gekennzeichnet, daß** die Mittel (2, 5, 6) zum Ausgeben des Drahtes (3) mindestens teilweise aus einer Windeinrichtung (5) gebildet sind.

4. Vorrichtung nach irgendeinem der Ansprüche 1 bis 3, **dadurch gekennzeichnet, daß** es vorgesehen ist, mehrere Drähte (3) aufzutragen, und daß sie Mittel (6) aufweist, um die Drähte vor den Mitteln (7) zur Querversetzung zusammenzubringen.

5. Vorrichtung nach Anspruch 4, **dadurch gekennzeichnet, daß** die Mittel (6) zum Zusammenbringen der Drähte (3) mindestens teilweise aus einem Kamm oder einem Zieheisen gebildet sind.

6. Vorrichtung nach irgendeinem der Ansprüche 1 bis 5, **dadurch gekennzeichnet, daß** sie Steuerungsmittel aufweist, um das Verhältnis (V1/V2) konstant zu halten.

7. Verfahren zum ständigen Aufbringen mindestens eines Fadens bzw. Drahtes (3) auf mindestens einen Träger (9), indem man dem Draht eine gewundene Form verleiht, um auf diese Weise mindestens eine Lage (13) zu erhalten, die mindestens die folgenden Merkmale aufweist:
- man liefert den Draht (3) und den Träger (9) mit gesteuerten Lineargeschwindigkeiten mit dem jeweiligen Wert V₁ und V₂ dank Einspeisungsmitteln (2, 5, 6) für den Draht und Einspeisungsmitteln (10, 11, 12) für den Träger an;
- zwischen den Mitteln (2, 5, 6) zu Einspeisung des Drahtes und den Mitteln (10, 11, 12) zur Einspeisung des Trägers versetzt man den Draht (3) dank Mitteln (7) zur Querversetzung in Querrichtung bezüglich seiner Vorschubrichtung;
- am Ausgang der Mittel (7) zur Querversetzung legt man den Draht (3) auf dem Träger (9) mit Hilfe von Mitteln (12) zum Auflegen auf;
- man treibt die Lage (13), die vom Draht (3) und dem Träger (9) gebildet ist, die so in Berührung stehen, durch Antriebsmittel (121, 14, 15) derart an, daß die Lineargeschwindigkeit des Trägers (9) einen Wert V₂ hat, der kleiner ist als V₁;
- man gewinnt die so erhaltene Lage (13);
- die Mittel zur Querversetzung sind mindestens teilweise aus einem Zieheisen (7) gebildet,
- die Auftragemittel des Drahtes (3) und die Antriebsmittel zum Antrieb der Lage (13), die durch den Draht (3) und den Träger (9) gebildet ist, sind mindestens teilweise aus zwei Trommeln (120, 121) eines Kalanders (12) gebildet, deren zylindrische Außenoberfläche eine glatte Oberfläche ist;
- die sinusartige Form, die dem Draht (3) auf dem Träger (9) mitgeteilt ist, ist durch abwechselnde Querbewegung dieses Fadens (3) gegeben, die man durch eine Schwingung des Zieheisens (7) in einer Richtung senkrecht zur Vorschubrichtung des Drahtes (3) vor den beiden Trommeln (120, 121) des Kalanders (12) hervorruft; und
- der Draht (3) wird auf den Träger (9) durch Pressen zwischen den beiden Trommeln (120, 121) des Kalanders (12) aufgebracht;
**dadurch gekennzeichnet, daß** man den Draht (3) abgibt, ohne nachfolgend die Zugspannung des Drahtes (3) zu kontrollieren, bevor man ihn auf dem Träger (9) aufbringt, so daß man den Draht (3) eine schlaffe Lage ohne Zugspannung zwischen den Auftragemitteln (12) und den Mitteln zur Querversetzung (7) einnehmen läßt, wenn die Mittel zur Querversetzung (7) sich in einer Zwischenlage zwischen ihren beiden seitlichen Endlagen befindet.

8. Verfahren nach Anspruch 7, **dadurch gekennzeichnet, daß** man die Zugspannung des Drahtes (3) vor der Ausgabe kontrolliert.

9. Verfahren nach den Ansprüchen 7 oder 8, **dadurch gekennzeichnet, daß** es mit einer Vorrichtung nach irgendeinem der Ansprüche 1 bis 6 durchgeführt wird.

## Claims

1. A device for continuously applying at least one thread (3) onto at least one support (9) while imparting to the thread a sinuous shape, so as to obtain at least one ply (13), comprising at least:
- feed means (2, 5, 6) for the thread and feed means (10, 11, 120) for the support which are capable of delivering respectively the thread (3) and its support (9) at controlled linear speeds;
- between the feed means (2, 5, 6) for the thread and the feed means (10, 11, 120) for the support, transverse displacement means (7) for displacing the thread (3) transversely with respect to its direction of advance;
- means (12) for applying the thread (3) thus displaced transversely to the support (9);
- on emerging from the application means (12), drive means (121, 14, 15) for driving the ply (13) formed by the thread (3) and the support (9) thus in contact,
- the transverse displacement means being formed at least in part by a thread guide (7) capable of moving perpendicular to the direction of advance of the thread (3), in an alternating movement, so as to impart to the thread (3) transverse alternating movements upstream of the application means (12);
- the application means for the thread (3) and the drive means for driving the ply (13) formed by the thread (3) and the support (9) being constituted at least in part by the two drums (120, 121) of a calender (12), the cylindrical outer surface of which is a smooth surface,
**characterised in that** it is devoid of means controlling the tension of the thread (3) between the means (2, 5, 6) for delivering the thread (3) and the means (12) for applying the thread (3) to the support (9).

2. A device according to Claim 1, **characterised in that** it comprises means (4) for controlling the tension of the thread (3) before the means (5, 6) for delivering the thread (3).

3. A device according to either one of Claims 1 or 2, **characterised in that** the means (2, 5, 6) for delivering the thread (3) are formed at least in part by a capstan (5).

4. A device according to any one of Claims 1 to 3, **characterised in that** it is provided for applying a plurality of threads (3) and **in that** it comprises means (6) for collecting the threads before the transverse displacement means (7).

5. A device according to Claim 4, **characterised in that** the means (6) for collecting the threads (3) are formed at least in part by a comb or a thread guide.

6. A device according to any one of Claims 1 to 15 [sic], **characterised in that** it comprises interdependence means for keeping the ratio (V1/V2) constant.

7. A process of continuously applying at least one thread (3) onto at least one support (9) while imparting to the thread a sinuous shape, so as to obtain at least one ply (13), comprising at least the following steps:
- the thread (3) and the support (9) are delivered at controlled linear speeds, of respective values V₁ and V₂, by feed means (2, 5, 6) for the thread and feed means (10, 11, 12) for the support,
- between the feed means (2, 5, 6) for the thread and the feed means (10, 11, 12) for the support, the thread (3) is displaced transversely with respect to its direction of advance, by transverse displacement means (7);
- on emerging from the transverse displacement means (7), the thread (3) is applied to the support (9) by means of application means (12);
- the ply (13) formed by the thread (3) and the support (9) thus in contact is driven by driving means (121, 14, 15) such that the linear speed of the support (9) has a value V₂ less than V₁;
- the ply (13) thus obtained is recovered;
- the transverse displacement means being formed at least in part by a thread guide;
- the application means for the thread (3) and the drive means for driving the ply (13) formed by the thread (3) and the support (9) being constituted at least in part by the two drums (120, 121) of a calender (12), the cylindrical outer surface of which is a smooth surface;
- the sinuous shape imparted to the thread (3) on the support (9) being provided by transverse alternating movements of this thread (3) which are caused by oscillation of the thread guide (7) in a direction perpendicular to the direction of advance of the thread (3), upstream of the two drums (120, 121) of the calender (12);
- the thread (3) being applied to the support (9) by pressing between the two drums (120, 121) of the calender (12);
**characterised in that** the thread (3) is delivered without then controlling the tension of the thread (3) before applying it to the support (9), such that the thread (3) is allowed to adopt a slack position, without tension, between the application means (12) and the transverse displacement means (7), when the transverse displacement means (7) are in an intermediate position between their two extreme lateral positions.

8. A process according to Claim 7, **characterised in that** the tension of the thread (3) is controlled before it is delivered.

9. A process according to Claims 7 or 8, **characterised in that** it is implemented using a device according to any one of Claims 1 to 6.
